Europäisches Patentamt

European Patent Office

Office européen des brevets

(19)

(11) Numéro de publication : **0 292 372 B1**

(12)

# FASCICULE DE BREVET EUROPEEN

(45) Date de publication du fascicule du brevet :
07.08.91 Bulletin 91/32

(51) Int. Cl.⁵ : **A01D 34/86**

(21) Numéro de dépôt : 88401179.2

(22) Date de dépôt : 16.05.88

(54) Faucheuse à appareil de coupe sur bras.

(30) Priorité : 19.05.87 FR 8706986

(43) Date de publication de la demande :
23.11.88 Bulletin 88/47

(45) Mention de la délivrance du brevet :
07.08.91 Bulletin 91/32

(84) Etats contractants désignés :
BE DE ES GB IT NL

(56) Documents cités :
EP-A- 0 149 870
FR-A- 2 470 525
NL-A- 8 301 557
US-A- 4 021 996
US-A- 4 330 981

(73) Titulaire : NICOLAS
RN 6
F-89290 Champs sur Yonne (FR)

(72) Inventeur : Pora, Hubert
c/o NICOLAS RN 6
F-89290 Champs sur Yonne (FR)

(74) Mandataire : Fort, Jacques
CABINET PLASSERAUD 84, rue d'Amsterdam
F-75009 Paris (FR)

## Description

L'invention concerne les faucheuses agricoles telles que définies dans le préambule de la revendication 1 et, plus particulièrement, les faucheuses portées comportant un appareil de coupe ayant un rotor tournant dans un châssis monté à une extrémité d'un bras de montage sur un véhicule, par l'intermédiaire de moyens de basculement autour d'un axe sensiblement horizontal et perpendiculaire à l'axe du rotor, lui-même sensiblement parallèle au sol, le châssis étant muni de moyens d'appui au sol placés en arrière du rotor dans la direction d'avancement de la faucheuse.

On connaît depuis longtemps des faucheuses du type ci-dessus (FR-A-2470525). Elles sont largement utilisées, notamment pour l'entretien de bordures de routes, de talus, de pelouses, etc. Le rotor est muni d'outils de coupe (lames ou couteaux, quelquefois fléaux lorsqu'on souhaite utiliser également la faucheuse en tant que débroussailleuse ou qu'élagueuse en bord de chemin). Des vérins équipant le bras permettent de maintenir le rotor, en forme de tambour, sensiblement parallèle au sol. Le bras est monté sur un véhicule porteur de façon que l'axe de rotor reste sensiblement perpendiculaire au sens d'avancement. Pour le transport, le bras est relevé pour amener la faucheuse au-dessus du véhicule.

Le fauchage ou l'éparage n'est satisfaisant que dans la mesure où les outils de coupe restent à une hauteur sensiblement constante au-dessus du sol ou, ce qui revient au même, où l'axe du rotor balaie une surface parallèle au sol.

Les moyens d'appui au sol, constitués sur la plupart des faucheuses par un rouleau ou des patins, ont pour but de réaliser cette condition. Mais ils ne le font que de façon très imparfaite sur terrain irrégulier. Au début d'une montée ou lorsqu'une butte se présente alors que le véhicule porteur roule à plat, les outils risquent de mordre le sol. Au début d'une descente, les lames laissent une végétation trop haute. Au surplus, ils ne permettent pas de compenser facilement l'usure progressive des couteaux de fauchage fixés au rotor.

Le phénomène est encore aggravé par les déformations éventuelles du bras en torsion, provoquées par le moment des forces de frottement au sol par rapport à l'axe des moyens de basculement, situé au-dessus du châssis. Ces déformations ne peuvent qu'aggraver le risque d'attaque du sol par les lames en montée.

On connaît également des faucheuses remorquées (USA-4330981) ayant à la fois un rouleau arrière d'appui au sol et une roue avant réglable roulant sur le sol et définissant, avec le rouleau, la hauteur du rotor. Le conducteur ne peut régler la hauteur de coupe qu'à l'arrêt, après être descendu du véhicule tracteur.

L'invention vise à fournir une faucheuse du type connu par le document FRA-A-2470525, améliorant la régularité du travail de fauchage ou d'éparage sur terrains variables et permettant de plus un réglage commode de la hauteur moyenne de coupe au-dessus du sol, sans pour autant exiger une intervention sur les moyens d'appui.

Dans ce but, l'invention propose notamment une faucheuse du type ci-dessus défini, conforme à la partie caractérisante de la revendication 1.

Dans la pratique, une solution commode consiste à monter le châssis sur le bras de façon qu'il soit possible de modifier l'orientation du châssis sur le bras autour d'un axe parallèle à celui du rotor et à constituer les moyens par au moins un vérin à double effet commandé à distance, généralement manuellement depuis le poste de conduite du véhicule porteur, dont l'un des éléments est relié au châssis et l'autre à un organe mécanique d'orientation fixée par la position du bras.

Cet autre élément peut en particulier être fixé à une biellette solidaire du maneton d'un ensemble maneton-chape appartenant aux moyens de basculement mentionnés plus haut.

Lorsque les moyens de modification d'inclinaison sont constitués par un vérin hydraulique, ce qui sera le cas le plus fréquent, les deux chambres du vérin seront reliées à une électrovanne de commande par des clapets anti-retour interdisant le retour de liquide des chambres vers l'électrovanne, ces clapets étant chacun à ouverture forcée par augmentation de pression en amont de l'autre clapet, de façon à permettre le retour de liquide lorsqu'il est nécessaire. La présence de clapets anti-retour permet, sur terrain plat ou lors du transport, de maintenir l'appareil de coupe dans une position invariable préalablement ajustée sans les interventions périodiques qu'exigeraient les fuites d'une électrovanne.

Les moyens de modification d'inclinaison seront généralement à commande manuelle par le conducteur du véhicule porteur. Cette solution a en effet de nombreux avantages : elle est très simple à mettre en oeuvre à l'aide d'une vanne placée au poste de conduite et elle permet au conducteur de tenir compte du relief et d'anticiper les accidents de terrain. Elle est très commode, car le bras de la faucheuse est généralement monté en avant de la cabine de conduite, dans le champ de vision du conducteur. L'avance est lente et en conséquence la mise en oeuvre n'exige pas des réactions instantanées et une attention extrême.

Les moyens peuvent cependant être commandés automatiquement pour que les outils suivent les irrégularités du sol. On peut par exemple prévoir des palpeurs déterminant la position du sol sous le châssis ou, mieux, un fléau faisant saillie vers l'avant et le bas à partir du châssis, constituant palpeur de sol et dont le basculement vers le haut ou vers le bas commande l'électrovanne. Cette solution, qu'on pouvait a priori penser indispensable pour soulager le conducteur ne

s'impose généralement pas.

A priori, la solution proposée par l'invention semble impossible à mettre en oeuvre, car le changement d'inclinaison par rotation autour de la ligne d'appui au sol provoque une montée ou une descente du point de liaison avec le bras, en principe rigide. Mais, dans la pratique, le bras présente toujours une flexibilité suffisante pour accepter sans contraintes excessives les déplacements requis.

Si le document US-A-4330981 décrit une faucheuse munie de moyens permettant de relever l'outil de coupe par rotation autour de la ligne d'appui du rouleau au sol, c'est uniquement en vue des transports alors que la faucheuse ne travaille pas.

L'invention sera mieux comprise à la lecture de la description qui suit d'un mode particulier de réalisation, donné à titre d'exemple non limitatif. La description se réfère aux dessins qui l'accompagnent dans lesquels :

— la Figure 1 est un schéma montrant la constitution générale d'une faucheuse à bras porteur ;

— la Figure 2 est une vue en élévation très simplifiée, destinée à montrer des moyens de modification d'inclinaison suivant un mode particulier d'exécution de l'invention ;

— la Figure 3 montre les moyens d'articulation et de changement d'inclinaison de l'appareil de la Figure 2, en vue de dessus et de façon très simplifiée ;

— les Figures 4 et 5, similaires à la Figure 2, montrent des variantes de réalisation.

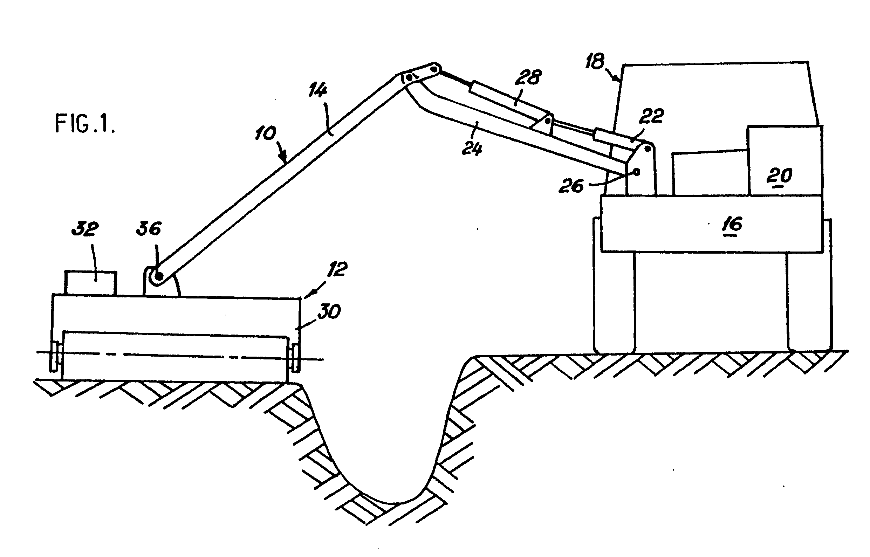

La faucheuse 10 montrée en Figure 1 comprend un appareil de coupe 12 porté par l'extrémité d'un bras articulé 14 dont l'extrémité opposée est portée par un châssis 16. Ce châssis est destiné à être fixé sur un véhicule porteur 18 et il sert également de support aux auxiliaires de fonctionnement, tels que le réservoir de fluide hydraulique 20 et l'ensemble pompe-électrovanne de commande. Le bras représenté comporte un premier vérin 22 permettant de faire tourner le premier segment 24 autour d'un axe 26 solidaire de la poutre et d'un second vérin 28 permettant de faire tourner le second segment du bras autour du premier. Mais l'invention serait également applicable à des bras ayant d'autres constitutions, par exemple comportant davantage de segments, ou un parallélogramme déformable, ou un système télescopique.

L'appareil de coupe 12 comporte un châssis 30 suspendu au second segment du bras et contenant un rotor muni d'outils de coupe (non visible sur la Figure 1) entraîné par un moteur hydraulique 32 alimenté par des conduites souples non représentées. Le châssis 30 est prévu pour reposer au sol par l'intermédiaire de moyens d'appui 34 constitués, sur la Figure 1, par un rouleau dont les tourillons s'engagent dans des paliers portés par une chape fixée au châssis.

Lorsque l'appareil de coupe est destiné uniquement à faucher des bas-côtés et des talus, le châssis est en général simplement suspendu au second segment du bras 14, de façon à pouvoir librement osciller autour d'un axe 36 parallèle à la direction d'avancement du véhicule, le rouleau 34 donnant automatiquement à l'appareil de coupe l'inclinaison transversale convenable. Par contre, lorsque la faucheuse est également prévue pour des opérations de debroussaillage ou d'elagage imposant un travail sans appui au sol du rouleau 34, un vérin supplémentaire est prévu entre le châssis 30 et le second segment du bras pour y fixer la pente transversale du châssis.

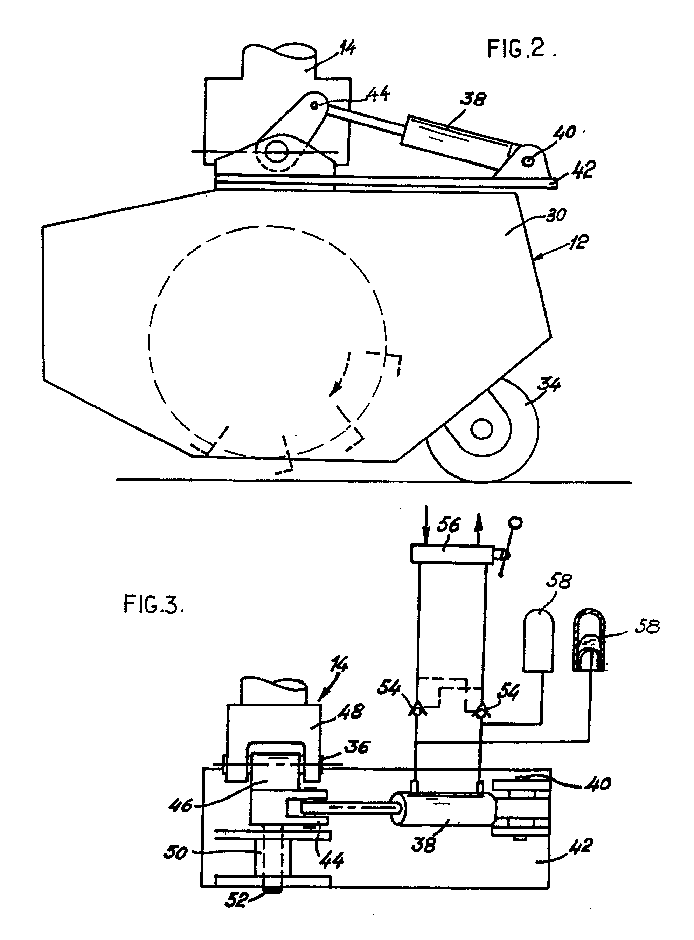

Sur les Figures 2 et 3, qui montrent un mode de réalisation particulier de l'invention, on retrouve le châssis 30 muni de son rouleau d'appui 34. Mais le châssis n'est pas suspendu directement au bras 14. Des moyens motorisés permettent de changer l'inclinaison longitudinale du châssis 30 en le faisant tourner autour de la ligne d'appui du rouleau 34 sur le sol. Dans le mode de réalisation représenté, ces moyens comportent un vérin hydraulique 38 à double effet. Le corps du vérin est monté par un axe 40 parallèle à la ligne d'appui du rouleau 34 au sol sur une plaque 42 solidaire du châssis 30. La tige du vérin 38 est de son coté articulée sur une chape 44 soudée au maneton 46 (Figure 3) constituant, avec l'axe 36 et la chape 48 terminale du bras, les moyens de basculement. Pour permettre au châssis 30 de débattre angulairement par rapport au bras lorsque le vérin 38 est mis en action, le châssis n'est pas fixé directement à la chape 44, mais porte un manchon 50 qui tourne sur un tourillon 52 solidaire de la chape 44.

Le circuit hydraulique associé au vérin 38 peut avoir la constitution de principe montrée en Figure 3. Les deux compartiments du vérin 38 sont reliés, par des clapets anti-retour respectifs 54, aux sorties d'une vanne de commande 56. Des accumulateurs hydrauliques 58, qui peuvent avoir une contenance faible, de l'ordre de 0,5 litre, sont avantageusement placés chacun entre un clapet anti-retour et le compartiment correspondant du vérin 38, pour assurer une fonction d'amortissement. Ces accumulateurs hydrauliques doivent être tarés de façon que leur membrane ne s'enfonce que lorsque la pression dans le compartiment correspondant dépasse la valeur maximale en fonctionnement normal.

Pour permettre le retour de fluide hydraulique depuis un compartiment lorsque l'autre compartiment est alimenté par la vanne 56, chacun des clapets anti-retour 54 est piloté par la pression qui règne en amont de l'autre clapet, afin de s'ouvrir à force et de permettre le fonctionnement normal. La vanne 56 à commande manuelle permet d'alimenter à volonté l'un ou l'autre des compartiments et de les isoler.

L'invention s'applique non seulement aux faucheuses destinées uniquement à couper l'herbe sur les talus, mais aussi aux machines utilisables comme élagueuses ou débroussailleuses, comprenant un vérin supplémentaire permettant par exemple d'orienter le rotor en position verticale. Sur ces dernières machines, le vérin d'orientation est généralement laissé libre lors du fonctionnement en faucheuse proprement dite.

L'invention ne se limite pas au mode particulier de réalisation qui a été représenté sur les Figures 1 à 3 et décrit à titre d'exemple. Elle est au contraire susceptible de nombreuses variantes. La disposition relative des axes 36 et 52 et leur disposition par rapport au vérin 38 peuvent être profondément modifiées. Le vérin peut être monté en avant aussi bien qu'en arrière du bras. Lorsqu'on recherche des débattements importants, des systèmes de parallélogramme déformable peuvent être prévus plutôt que des liaisons directes.

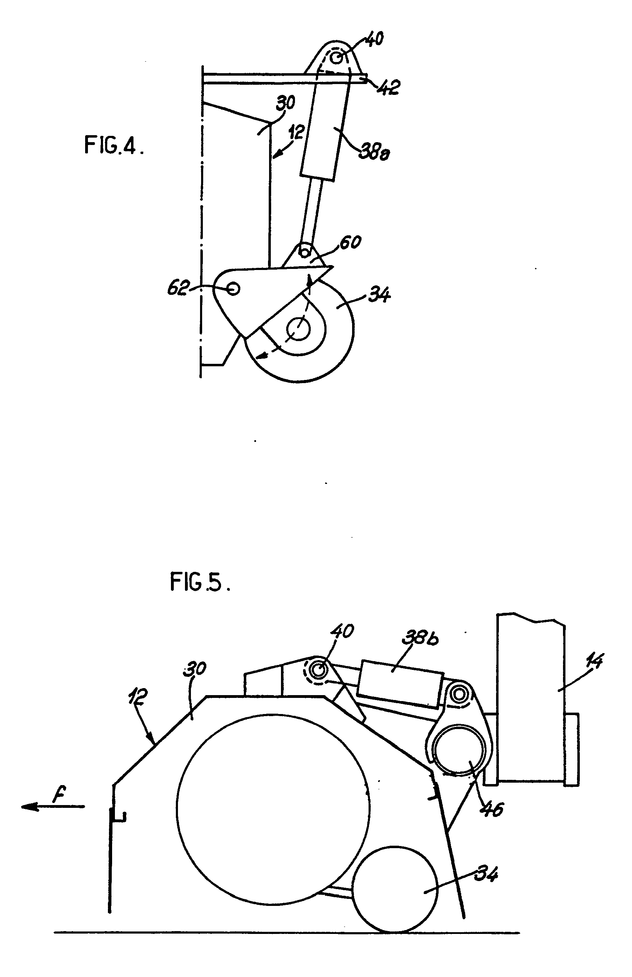

Dans la variante montré en Figure 4, où les organes correspondant à ceux déjà représentés sont désignés par le même numéro de référence, le vérin 38a est cette fois interposé entre la plaque 42 et un étrier 60 solidaire de la chape du rouleau 34. Cette chape est non plus fixée au châssis 30, mais montée sur un axe 62. Un seul vérin 38a peut être prévu, à mi-longueur du châssis. Si celui-ci est très long, deux vérins peuvent être placés, chacun à une extrémité.

Dans la variante de la Figure 5, où les organes déjà représentés portent le même numéro de référence, deux vérins 38b relient chacun un axe 40 fixé au châssis 30 à un maneton 46 porté par le bras 14. Le sens d'avance est celui de la flèche f.

**Revendications**

1. Faucheuse comportant un appareil de coupe (12) ayant un rotor tournant dans un châssis (30) monté à une extrémité d'un bras (14) par l'intermédiaire de moyens de basculement (26) lui permettant de basculer autour d'un axe sensiblement horizontal et perpendiculaire à l'axe du rotor, prévu pour être lui-même sensiblement parallèle au sol, le châssis étant muni de moyens d'appui au sol d'axe parallèle à celui du rotor tels qu'un rouleau (34), lesdits moyens d'appui au sol étant uniquement placés à l'arrière du rotor dans la direction d'avancement de la faucheuse, caractérisée en ce qu'elle comporte des moyens motorisés permettant de changer l'inclinaison du châssis (30) par rapport au bras (14) dans un plan perpendiculaire à l'axe des moyens d'appui au sol.

2. Faucheuse selon la revendication 1, caractérisée en ce que le châssis (30) est monté sur le bras (14) de façon qu'il soit possible de modifier l'orientation du châssis sur le bras autour d'un axe (52) parallèle à celui du rotor et en ce que les moyens motorisés sont constitués par au moins un vérin à double effet (38) commandé manuellement à distance, dont l'un des éléments est solidaire du châssis et l'autre d'un organe mécanique dont l'orientation est fixée par la position du bras.

3. Faucheuse selon la revendication 2, caractérisée en ce que ledit autre élément est fixé à une biellette (44) solidaire du maneton (46) d'un ensemble maneton-chape appartenant aux moyens de basculement (26).

4. Faucheuse selon la revendication 1, caractérisée en ce que les moyens motorisés sont constitués par un vérin hydraulique (38) dont les deux chambres sont reliées à une électrovanne de commande par des clapets anti-retour interdisant le retour de liquide des chambres vers l'électrovanne, ces clapets étant chacun à ouverture forcée par augmentation de pression en amont de l'autre clapet, de façon à permettre le retour de liquide lorsqu'il est nécessaire.

5. Faucheuse selon la revendication 2, 3 ou 4, caractérisée en ce que chaque chambre de vérin est reliée à un accumulateur hydraulique pré-taré à une pression supérieure à la pression de mise en action du vérin.

6. Faucheuse selon l'une quelconque des revendications 1 à 5, caractérisée en ce que les moyens de modification d'inclinaison sont à commande par une vanne placée au poste de conduite d'un véhicule porteur, actionnable manuellement par le conducteur du véhicule.

**Patentansprüche**

1. Mäher umfassend eine Schneidevorrichtung (12) mit einem sich drehenden Rotor, der im Rahmen (30) an einem Ende von einem Arm (14) unter Zwischenschaltung eines Gelenkes (36) angebracht ist, das es ihm erlaubt, um eine etwa horizontale Achse und senkrecht zur Achse des Rotors zu kippen, der selbst etwa parallel zum Boden vorgesehen ist, wobei der Rahmen mit einer auf den Boden abstützenden Vorrichtung versehen ist, deren Achse parallel zu derjenigen des Rotors ist, wie beispielsweise eine Rolle (34), wobei die am Boden abstützende Vorrichtung in Fahrrichtung des Mähers nur an der Rückseite des Rotors angeordnet ist, **dadurch gekennzeichnet,** daß der Mäher Motoreinrichtungen umfaßt, die die Änderung der Neigung des Rahmens (30) zu dem Arm (14) in einer Ebene senkrecht zu der Achse der am Boden abstützenden Vorrichtung erlauben.

2. Mäher nach Anspruch 1, dadurch gekennzeichnet, daß der Rahmen (30) an dem Arm (14) angebracht ist, so daß es möglich ist, die Ausrichtung des Rahmens an dem Arm um eine parallele Achse (52) parallel zu der des Rotors zu ändern und daß die Motoreinrichtungen aus wenigstens einem hand- und ferngesteuertem Stellglied (38) mit zwei Wirkrichtungen bestehen, dessen eines Element mit dem Rahmen und dessen anderes mit einem mechanischen Bauteil fest verbunden ist, dessen Richtung durch die Stellung des Armes festgelegt ist.

3. Mäher nach Anspruch 2, dadurch gekennzeichnet, daß das andere Element an einem Schwenkarm (44), der fest mit einem Zapfen (46) eines Aufbaus eines Zapfen-Gabelgelenks verbunden ist, mittels des Gelenks (36) befestigt ist.

4. Mäher nach Anspruch 1, dadurch gekennzeichnet, daß die Motoreinrichtungen aus einem hydraulischen Stellglied (38) besteht, dessen zwei Kammern mit einem Elektroventil zur Steuerung durch Rückschlagventile verbunden sind, die den Rückfluß der Flüssigkeit der Kammern in die Richtung des Elektroventils nicht zulassen, wobei diese Rückschlagventile alle erzwungenermaßen durch die Zunahme des Druckes stromaufwärts des anderen Rückschlagventils geöffnet werden, so daß der Rückfluß der Flüssigkeit erlaubt wird, wenn es notwendig ist.

5. Mäher nach einem der Ansprüche 2, 3 oder 4, dadurch gekennzeichnet, daß jede Kammer des Stellglieds mit einem hydraulischen Speicher verbunden ist, der auf einen höheren Druck im Vergleich zu dem Arbeitsdruck des Stellgliedes voreingestellt ist.

6. Mäher nach einem der Ansprüche 1 bis 5, dadurch gekennzeichnet, daß die Vorrichtungen zur Änderung der Neigung durch ein Ventil gesteuert werden, das in der Leitstelle eines Wagens mit einer solchen Mähvorrichtung angebracht und handbetätigbar durch den Fahrzeugführer ist.

## Claims

1. Mower comprising a cutting appliance (12) having a rotor rotating in a frame (30) mounted at one end of an arm (14) via tilting means (26) allowing it to tilt about a substantially horizontal axis perpendicular to the axis of the rotor, itself intended to be substantially parallel to the ground, the frame being equipped with means for bearing on the ground of an axis parallel to that of the rotor, such as a roller (34), the said ground-bearing means being located only at the rear of the rotor in the direction of advance of the mower, characterised in that it comprises motorised means making it possible to change the inclination of the frame (30) in relation to the arm (14) in a plane perpendicular to the axis of the ground-bearing means.

2. Mower according to Claim 1, characterised in that the frame (30) is mounted on the arm (14) in such a way that it is possible to modify the orientation of the frame on the arm about an axis (52) parallel to that of the rotor, and in that the motorised means consist of at least one double-acting jack (38) which is remotely controlled manually and of which one of the elements is fixed to the frame and the other to a mechanical member, the orientation of which is fixed by the position of the arm.

3. Mower according to Claim 2, characterised in that the said other element is fastened to a link (44) fixed to the crankpin (46) of a crankpin/fork assembly belonging to the tilting means (26).

4. Mower according to Claim 1, characterised in that the motorised means consist of a hydraulic jack (38), the two chambers of which are connected to a solenoid control valve by means of non-return clack valves preventing the return of fluid from the chambers towards the solenoid valve, these clack valves each having forced opening as a result of an increase in pressure upstream of the other clack valve, so as to allow fluid to return when necessary.

5. Mower according to Claim 2, 3 or 4, characterised in that each jack chamber is connected to a hydraulic accumulator precalibrated to a pressure higher than the activating pressure of the jack.

6. Mower according to any one of Claims 1 to 5, characterieed in that the means for modifying the inclination are controlled by a valve located in the driver's cab of a carrier vehicle and actuable manually by the driver of the vehicle.

FIG.1.

EP 0 292 372 B1

FIG.2.

FIG.3.

FIG.4.

FIG.5.